# EUROPÄISCHE PATENTSCHRIFT

(11) **EP 1 979 737 B1**
(45) Veröffentlichungstag und Bekanntmachung des Hinweises auf die Patenterteilung: **26.08.2009**
(21) Anmeldenummer: 07703174.8
(22) Anmeldetag: 01.02.2007
(51) Int. Cl.: G01N 21/85, G01N 21/15

(54) **VORRICHTUNG ZUR OPTISCHEN MESSUNG VON STOFFKONZENTRATIONEN**
APPARATUS FOR OPTICAL MEASUREMENT OF SUBSTANCE CONCENTRATIONS
DISPOSITIF DE MESURE OPTIQUE DE CONCENTRATIONS DE SUBSTANCES

(30) Priorität: 01.02.2006 DE 102006004916
(43) Veröffentlichungstag der Anmeldung: 15.10.2008
(73) Patentinhaber: J & M Analytik AG, 73457 Essingen (DE); Gea Process Engineering (NPS) Ltd., Eastleigh, Hampshire SO53 4ZD (GB)
(72) Erfinder: MANNHARDT, Joachim, 73569 Eschach (DE); PAGE, Trevor, Southampton SO45 4RA (GB)
(74) Vertreter: Raunecker, Klaus Peter
(86) Internationale Anmeldenummer: PCT/EP2007/000838
(87) Internationale Veröffentlichungsnummer: WO 2007/088047

(56) Entgegenhaltungen:
- EP-A- 0 144 929
- EP-A- 1 321 758
- DE-A1- 1 959 612
- DE-A1- 3 339 950
- DE-U1- 9 319 750
- JP-A- 62 025 239
- US-A- 5 335 067
- US-A- 5 708 273

## Beschreibung

Die Erfindung betrifft eine Vorrichtung zur optischen Messung von Stoffkonzentrationen, mit einem Sender und einem Empfänger für optische Strahlung nach der im Oberbegriff von Anspruch 1 näher definierten Art.

Eine gattungsgemäße Vorrichtung ist beispielsweise aus der DE 93 19 750 U1 bekannt. Solche im allgemeinen auch als Tauchsonden bezeichnete Vorrichtungen werden meist zur Analyse von Flüssigkeiten beispielsweise in der chemischen, biologischen und pharmazeutischen Forschung, Produktion und Inspektion eingesetzt. Sie kommen jedoch auch bei schüttfähigen Stoffen, wie beispielsweise Pulvern oder Granulaten, zum Einsatz. Dabei wird mittels der optischen Strahlung, üblicherweise Licht, die Absorption gemessen, die das Medium bewirkt, wenn es von der optischen Strahlung durchdrungen wird.

In der Praxis besteht ein häufiges Problem solcher Vorrichtungen darin, dass es bei manchen Anwendungen erforderlich ist, unterschiedliche Schichtdicken des Stoffes zu messen. Hierzu ist es bei den bekannten Vorrichtungen erforderlich, die Messsonde bzw. die Umlenkeinrichtung für die optische Strahlung auszutauschen, wodurch sich teilweise erhebliche Unterbrechungen des Betriebs ergeben.

Eine weitere Vorrichtung ist aus der DE 1 959 612 A1 bekannt. Diese Vorrichtung offenbart die im Oberbegriff des Anspruchs 1 genannten Merkmale. Insbesondere offenbart die DE 1 959 612 A1 eine Umlenkeinrichtung zum Umlenken der optischen Strahlung von dem wenigstens einen Sender zu dem wenigstens einen Empfänger, wobei der Abstand der Umlenkeinrichtung zu dem wenigstens einen Sender und/oder dem wenigstens einen Empfänger mittels einer Verstelleinrichtung veränderbar ist.

Durch diese Verstelleinrichtung ist es möglich, den Abstand zwischen der Umlenkeinrichtung und dem Sender und/oder dem Empfänger zu verändern, so dass auch während der Messung die Schichtdicke des zu messenden Stoffes variiert werden kann. Vorteilhafterweise ist dadurch keine Unterbrechung des Betriebs mehr notwendig, was zu einer erheblichen Einsparung von Zeit und somit von Kosten führt.

Es ist daher eine Aufgabe der vorliegenden Erfindung, eine Vorrichtung zur optischen Messung von Stoffkonzentrationen zu schaffen, mittels welcher mit verhältnismäßig geringem Aufwand unter-schiedliche Schichtdicken von zu untersuchenden Stoffen gemessen werden können.

In der Praxis besteht ein weiteres Problem darin, dass es bei manchen Anwendungen erforderlich ist, Referenzmessungen oder eine Reinigung der Flächen der Vorrichtung zwischen dem Gehäuse und der Umlenkeinrichtung durchzuführen. Hierzu ist es bei den bekannten Vorrichtungen erforderlich, die Vorrichtung aus dem Stoff zu entfernen.

Es ist daher eine weitere Aufgabe der vorliegenden Erfindung, eine Vorrichtung zur optischen Messung von Stoffkonzentrationen zu schaffen, mittels welcher mit verhältnismäßig geringem Aufwand Referenzmessungen oder eine Reinigung der Flächen der Vorrichtung zwischen dem Gehäuse und der Umlenkeinrichtung durchgeführt werden können.

Erfindungsgemäß werden diese Aufgaben durch die in Anspruch 1 genannten Merkmale gelöst.

Durch die erfindungsgemäße Verstelleinrichtung ist es möglich, den Abstand zwischen der Umlenkeinrichtung und dem Sender und/oder dem Empfänger zu verändern, so dass auch während der Messung die Schichtdicke des zu messenden Stoffes variiert werden kann. Vorteilhafterweise ist dadurch keine Unterbrechung des Betriebs mehr notwendig, was zu einer erheblichen Einsparung von Zeit und somit von Kosten führt.

Durch diese Variabilität der Schichtdicke des zu messenden Stoffes kann außerdem die Empfindlichkeit der Vorrichtung sehr einfach an die jeweilige Messaufgabe angepasst werden. Ein weiterer Vorteil der erfindungsgemäßen Verstelleinrichtung besteht darin, dass auf diese Weise die Umlenkeinrichtung an einen anderen Ort verfahren werden kann, beispielsweise um dieselbe zu reinigen.

In einer sehr einfachen und praxistauglichen Ausführungsform der Erfindung kann vorgesehen sein, dass die Verstelleinrichtung wenigstens ein Aufnahmeelement und ein in dem wenigstens einen Aufnahmeelement verschieblich gelagertes Verschiebeelement aufweist, wobei eines der Bauteile der Verstelleinrichtung mit dem Gehäuse und das andere Bauteil mit der Umlenkeinrichtung verbunden ist.

Um eine komfortablere Bedienung der Verstelleinrichtung zu erreichen, kann vorgesehen sein, dass diese elektrisch, hydraulisch oder pneumatisch verstellbar ist.

Erfindungsgemäß isr vorgesehen, dass die Umlenkeinrichtung so gegenüber dem Sender und dem Empfänger verstellbar ist, dass die Umlenkeinrichtung mit dem Gehäuse einen abgeschlossenen Hohlraum bildet.

Durch diesen abgeschlossenen Hohlraum ist es möglich, Referenzmessungen an in den Hohlraum eingeleiteten Stoffen durchzuführen, ohne die Vorrichtung aus dem Stoff zu entfernen, was ebenfalls zur Vereinfachung des Prozessablaufs beitragen kann.

Wenn in diesem Zusammenhang eine Spüleinrichtung zum Spülen des Hohlraums zwischen dem Gehäuse und der Umlenkeinrichtung vorgesehen ist, so ist ein einfaches Spülen des Hohlraums und damit Reinigen der den Hohlraum umgebenden Flächen möglich, und zwar ebenfalls ohne die Vorrichtung aus dem Stoff entfernen zu müssen. Des weiteren ist in diesem Fall das Einleiten von Referenzmedien in den Hohlraum.möglich.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine erste Ausführungsform der erfindungsgemäßen Vorrichtung zur optischen Messung von Stoffkonzentrationen;
- Fig. 2: eine zweite Ausführungsform der erfindungsgemäßen Vorrichtung zur optischen Messung von Stoffkonzentrationen;
- Fig. 3: in den entsprechenden Teilfiguren Teile weiterer Ausführungsformen der erfindungsgemäßen Vorrichtung zur optischen Messung von Stoffkonzentrationen; Obwohl nicht dargestellt, weist die Vorrichtung das im kennzeichnenden Teil des Anspruchs 1 genannte Merkmal auf
- Fig. 4: die erfindungsgemäße Vorrichtung mit einer detaillierteren Darstellung der Umlenkeinrichtung; Obwohl nicht dargestellt, weist die Vorrichtung das im kennzeichnenden Teil des Anspruchs 1 genannte Merkmal auf
- Fig. 5: die Vorrichtung aus Fig. 4 in einem anderen Zustand der Verstelleinrichtung;
- Fig. 6: einen Schnitt nach der Linie VI-VI von Fig. 4;
- Fig. 7: einen Schnitt analog zu demjenigen von Fig. 6 bei einer anderen Ausführungsform der Vorrichtung und
- Fig. 8: eine konstruktive Variante zur Realisation der Verstelleinrichtung.

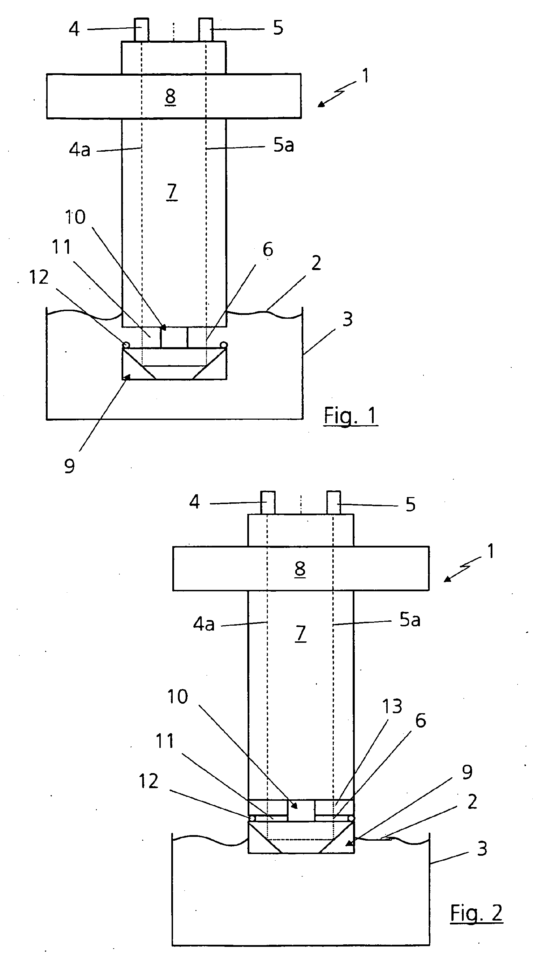

Fig. 1 zeigt eine Vorrichtung 1 zur Messung der Konzentration eines Stoffes 2, der im vorliegenden Fall in einem Behälter 3 aufgenommen ist. Bei dem Stoff 2 kann es sich um eine Flüssigkeit, gegebenenfalls mit einem darin aufgelösten Zusatzstoff, oder um Schüttgut, wie Pulver, Körner oder Granulate, handeln. Die Vorrichtung 1 kann auch als Tauchsonde bezeichnet werden und weist einen Sender 4 sowie einen Empfänger 5 für optische Strahlung 6 auf. Bei der optischen Strahlung handelt es sich vorzugsweise um Licht und der Sender 4 sowie der Empfänger 5 weisen denselben zugeordnete Lichtleiter 4a bzw. 5a auf.

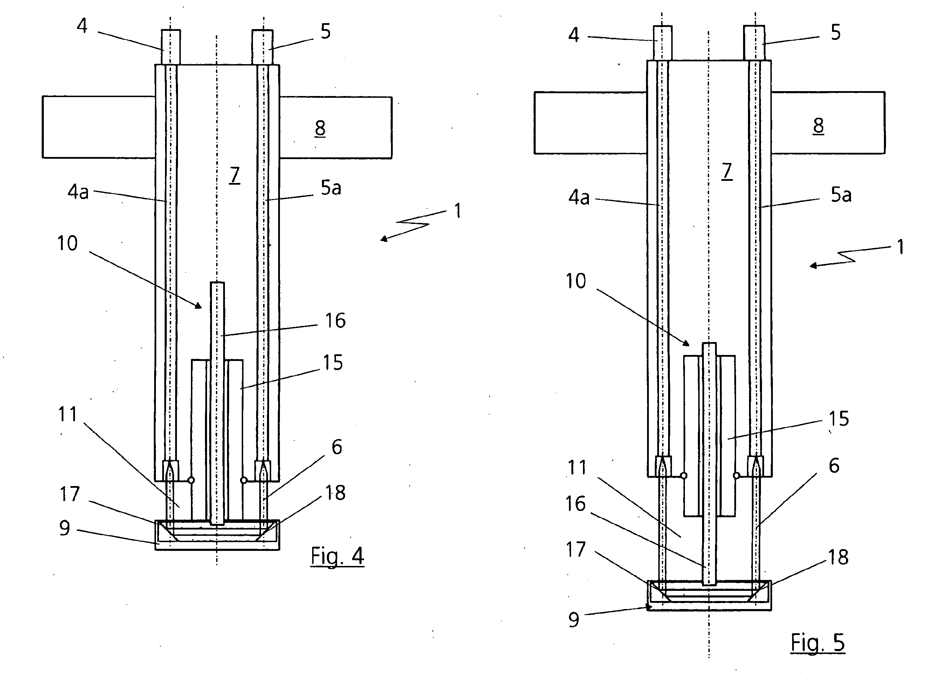

Der Sender 4 und der Empfänger 5 sind in einem Gehäuse 7 untergebracht, welches einen Flansch 8 aufweist, über den es an bestehenden Messvorrichtungen oder dergleichen angebracht werden kann. Die Vorrichtung 1 weist des weiteren eine bei bestimmungsgemäßer Verwendung derselben innerhalb des Stoffes 2 angeordnete Umlenkeinrichtung 9 auf, die zum Umlenken der von dem Sender 4 ausgesandten optischen Strahlung 6 zu dem Empfänger 5 dient. Die Umlenkeinrichtung 9, die erst in den Figuren 4 und 5 detaillierter dargestellt ist, kann mittels einer Verstelleinrichtung 10 gegenüber dem Gehäuse 7 und damit gegenüber dem Sender 4 und dem Empfänger 5 verstellt werden. Auf diese Weise ist es möglich, mit der Vorrichtung 1 verschiedene Schichtdicken des Stoffes 2 zu messen, ohne die Vorrichtung 1 aus dem Stoff 2 zu entfernen. Des weiteren ermöglicht es die Verstelleinrichtung 10, die Umlenkeinrichtung 9 durch eine nicht dargestellte Dichtung in dem Flansch 8 zu verfahren, beispielsweise um dieselbe außerhalb des Prozesses zu reinigen. Wenn dabei die Umlenkeinrichtung 9 vollständig an das Gehäuse 7 verfahren wird, ergibt sich eine glatte, durchgängige Fläche ohne störende Kante, sodass die Dichtung nicht beschädigt wird.

Um einen Hohlraum 11 zwischen dem Gehäuse 7 und der Umlenkeinrichtung 9 zu schaffen, in welchem eine gewisse Menge des Stoffes 2 eingeschlossen werden kann, ist es erfindungsgemäß möglich, die Umlenkeinrichtung 9 so nah an das Gehäuse 7 zu verfahren, dass sich der nach außen abgeschlossene Hohlraum 11 ergibt. Hierzu weist die Vorrichtung 1 eine im vorliegenden Fall an der Umlenkeinrichtung 9 angebrachte Dichtung 12 auf, die für eine gute Abdichtung des auf die genannte Art und Weise geschaffenen Hohlraums 11 dient.

Die in Fig. 2 dargestellte Ausführungsform der Vorrichtung 1 weist einen an der Unterseite des Gehäuses 7, also der der Umlenkeinrichtung 9 zugewandten Seite desselben, einen Bund 13 auf, der den Abstand zwischen der Umlenkeinrichtung 9 und dem Gehäuse 7 verringert und einen Mindestabstand dazwischen herstellt. Auf diese Weise kann zusätzlich Einfluss auf die mit der Vorrichtung 1 messbare Schichtdicke des Stoffes 2 genommen werden. Auch hier ist die Dichtung 12 vorgesehen, die den Hohlraum 11 nach außen abdichtet. Prinzipiell wäre es auch möglich, die Dichtung 12 in radialer Richtung betrachtet weiter innen anzubringen. Zusätzlich ist es bei sämtlichen Ausführungsformen der Vorrichtung 1 möglich, eine nicht dargestellte Abstandsmesseinrichtung zum Messen des Abstands zwischen der Umlenkeinrichtung 9 und dem Sender 4 sowie dem Empfänger 5 bzw. dem Gehäuse 7 vorzusehen.

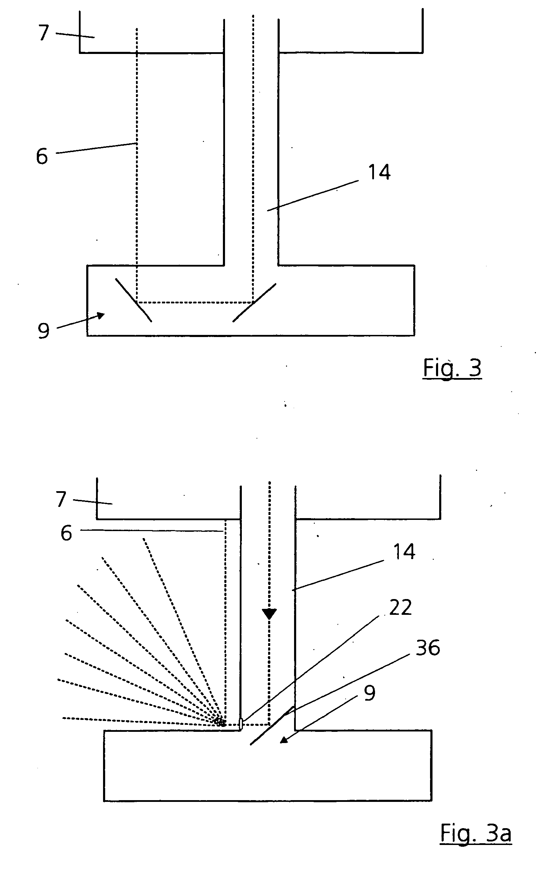

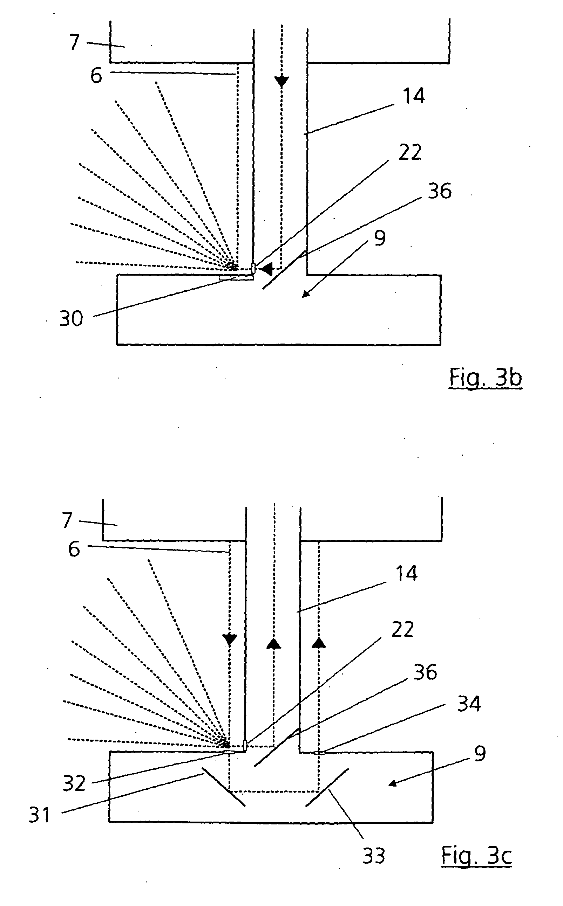

Während in den Figuren 1 und 2 die Umlenkeinrichtung 9 so ausgebildet ist, dass die optische Strahlung 6 zweimal durch den Stoff 2 verläuft, nämlich auf dem Weg von dem Gehäuse 7 zu der Umlenkeinrichtung 9 und auf dem Rückweg von der Umlenkeinrichtung 9 zu dem Gehäuse 7, ist die Umlenkeinrichtung 9 gemäß Fig. 3 so angeordnet, dass die optische Strahlung 6 lediglich einmal durch den Stoff 2 verläuft. Hierzu ist in dem Bereich zwischen dem Gehäuse 7 und der Umlenkeinrichtung 9 ein Rohr 14 angeordnet, durch welches die optische Strahlung 6 geführt ist. Im vorliegenden Fall ist die optische Strahlung 6 auf dem Weg von der Umlenkeinrichtung 9 in das Gehäuse 7 in dem Rohr 14 geführt, es wäre jedoch auch möglich, die optische Strahlung 6 auf dem Weg von dem Gehäuse 7 zu der Umlenkeinrichtung 9 in dem Rohr 14 zu führen. Die Anordnung gemäß Fig. 3 wird dann eingesetzt, wenn der zu untersuchende Stoff 2 eine sehr hohe Absorption aufweist, so dass bei einem zweimaligen Durchlaufen desselben zu viel Energie der optischen Strahlung 6 verloren ginge.

Figur 3a zeigt eine weitere Variante der Erfindung, die sich insbesondere zur Durchführung von Fluoreszenzmessungen eignet.

Die Besonderheit bei der in der genannten Figur dargestellten Variante besteht darin, dass die zur Messung verwendete optische Strahlung in der Weise gelenkt wird, dass die einfallende und die von dem zu messenden Stoff abgelenkte beziehungsweise gestreute oder emittierte optische Strahlung in einem Winkel von circa 90° zueinander stehen. Dies wird in der in Fig. 3a dargestellten Ausführungsform dadurch erreicht, dass die Umlenkeinrichtung 9, die im vorliegenden Fall einen einfachen Spiegel 36 zeigt, in der Weise ausgeführt ist, dass die optische Strahlung über den Spiegel 36 durch das optische Fenster 22 senkrecht zu dem Rohr 14 in den zu messenden Stoff gelenkt wird. Wie in Figur 3a angedeutet, wird die optische Strahlung von denen zu messenden Stoff in verschiedenste Richtungen abgelenkt; allerdings erreicht nur der Anteil der optischen Strahlung, der senkrecht zur Einfallsrichtung abgelenkt wird, in dem Gehäuse 7 angeordneten nicht dargestellten Empfänger 5. Somit wird durch die Geometrie der Anordnung die Durchführung von Fluoreszenzmessungen möglich.

Im Figurenteil 3b ist eine Variante der in Figur 3a gezeigten Vorrichtung dargestellt. Als zusätzliche Komponente ist in Figur 3b der weitere Spiegel 30 dargestellt, durch den auch der Anteil der optischen Strahlung 6, der von dem zu messenden Stoff in die dem Empfänger 5 entgegengesetzte Richtung emittiert wird, in Richtung des Empfängers 5 reflektiert wird. Auf diese Weise wird die Effizienz der in Figur 3a beschriebenen Floureszenzmessung weiter erhöht.

Figur 3c zeigt eine weitere Ausführungsform der Erfindung, die die parallele oder auch sequentielle Messung von Absorption, Streuung und Fluoreszenz gestattet.

Im Vergleich zu Figur 3b ist in dem in Figur 3c gezeigten Fall die Richtung der optischen Strahlung 6 -wie durch die Pfeile angedeutet - entgegengesetzt. Der transmittierte bzw. in Vorwärtsrichtung gestreute Anteil der optischen Strahlung 6 tritt durch das erste optische Fenster 32 und fällt auf die Spiegel 31 und 32, wo sie in Richtung des nicht dargestellten Empfängers 5 abgelenkt werden und das zweite optische Fenster 34 durchtreten. Der Anteil der optischen Strahlung 6, der von dem zu messenden Stoff in senkrechter Richtung abgelenkt bzw. emittiert wird, durchtritt das optische Fenster 22 in Richtung des Rohres 14 und wird im Rohr 14 von dem Spiegel 36 in Richtung des nicht dargestellten Empfängers 5 gelenkt.

Anstatt der Spiegel 30, 31, 33 und 36 können selbstverständlich jegliche Elemente verwendet werden, die geeignet sind, optische Strahlung hinsichtlich ihrer Richtung zu beeinflussen, also insbesondere Gitter, Lichtwellenleiter oder ähnliches.

Fig. 4 zeigt eine detailliertere Darstellung der Vorrichtung 1. Hierbei ist erkennbar, dass die Verstelleinrichtung 10 ein Führungs- bzw. Aufnahmeelement 15 und ein in dem Aufnahmeelement 15 verschieblich gelagertes Verschiebeelement 16 aufweist und dass das Aufnahmeelement 15 mit dem Gehäuse 7 und das Verschiebeelement 16 mit der Umlenkeinrichtung 9 verbunden ist. Die Anordnung dieser beiden Bauteile der Verstelleinrichtung 10 könnte jedoch auch umgekehrt sein. Im vorliegenden Fall ist das Aufnahmeelement 15 in Form eines Rohres ausgeführt, in dem das in der dargestellten Ausführungsform als Stange ausgebildete Verschiebeelement 16 verschieblich geführt ist. Selbstverständlich sind jedoch auch andere Ausführungsformen des Aufnahmeelements 15 und des Verschiebeelements 16 denkbar, z.B. in Form von Gewinden oder ähnlichem.

Die Betätigung der Verstelleinrichtung 10 und damit die Verstellung der Umlenkeinrichtung 9 kann manuell erfolgen, wobei dann eine Rasterung an dem Gehäuse 7 vorhanden sein sollte, an welcher die tatsächlich gemessene Schichtdicke einstellbar und ablesbar ist. Alternativ ist auch ein elektrischer, hydraulischer oder pneumatischer Antrieb der Verstelleinrichtung 10 denkbar, wozu bekannte Einrichtungen eingesetzt werden können.

Aus Fig. 4 geht des weiteren hervor, dass die Umlenkeinrichtung 9 im vorliegenden Fall zwei Spiegel 17 und 18 aufweist, die zur Umlenkung der optischen Strahlung 6 dienen. Da diese Ausführungsform der Umlenkeinrichtung 9 an sich bekannt ist, braucht sie hierin nicht näher beschrieben werden. Dies gilt auch für die nicht dargestellte Ausführungsform, in der die Umlenkeinrichtung 9 als Prisma ausgebildet ist.

In Fig. 5 ist die Vorrichtung 1 in ihrem ausgefahrenen Zustand, in dem der Abstand zwischen der Umlenkeinrichtung 9 und dem Gehäuse 7 mittels der Verstelleinrichtung 10 vergrößert wurde, dargestellt. Hierbei kann die Schichtdicke stufenlos oder durch die oben beschriebene Rasterung verstellt werden. Selbstverständlich ist auch ein anderer als der in den Figuren 4 und 5 dargestellte Verstellbereich der Umlenkeinrichtung 9 denkbar.

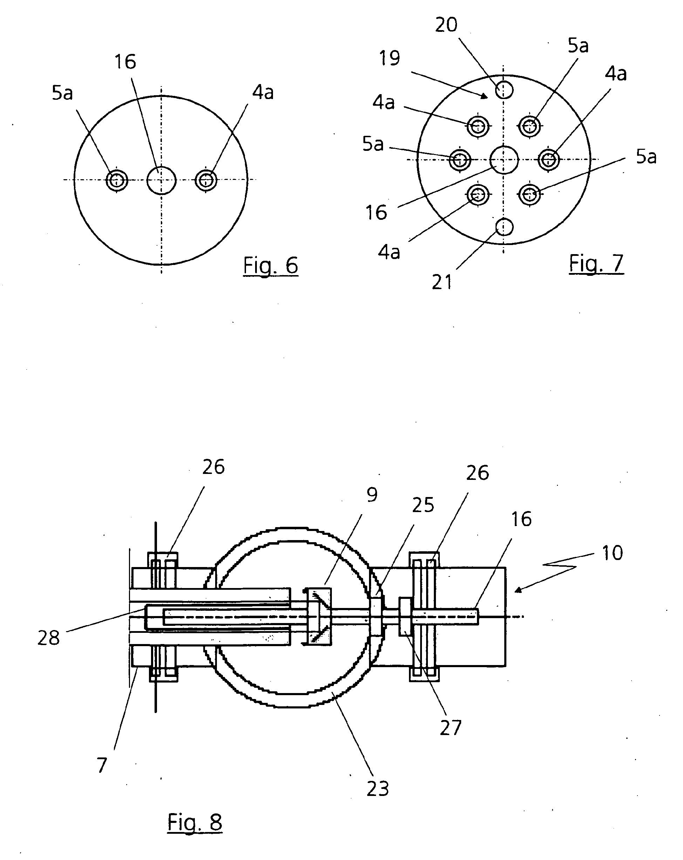

Fig. 6 zeigt einen Schnitt durch die Vorrichtung 1 gemäß der Linie VI - VI von Fig. 4. Hierbei ist erkennbar, dass das Aufnahmeelement 15 der Verstelleinrichtung 10 im wesentlichen in der Mitte des Gehäuses 7 angeordnet ist. Selbstverständlich sind auch andere Anordnungen des Verschiebeelements 16 und damit des Aufnahmeelements 15 möglich. In diesem Zusammenhang könnte die Verstelleinrichtung 10 auch mehr als das eine Aufnahmeelement 15 und das zugeordnete Verschiebeelement 16 aufweisen, z.B. um eine erhöhte Stabilität zu erhalten. Des weiteren sind in Fig. 6 der Lichtleiter 4a des Senders 4 und der Lichtleiter 5a des Empfängers 5 im Schnitt dargestellt. Auch hier sind selbstverständlich andere Anordnungen derselben über den Querschnitt des Gehäuses 7 denkbar.

Eine weitere Ausführungsform der Vorrichtung 1 ist in dem Schnitt gemäß Fig. 7 dargestellt. Hierbei ist die Verstelleinrichtung 10 ebenfalls mittig innerhalb des Gehäuses 7 angeordnet, es ist jedoch eine größere Anzahl an Sendern 4 mit entsprechenden Lichtleitern 4a und Empfängern 5 mit entsprechenden Lichtleitern 5a dargestellt. Hierdurch ist bei gleicher Wellenlänge ein größerer Lichtdurchsatz möglich oder, wenn entsprechende Lichtquellen eingesetzt werden, eine Kombination von Wellenlängenbereichen mit unterschiedlichen Lichtleitern, wodurch mit einer Messung unterschiedliche Messungen durchgeführt werden können. Des weiteren kann auf diese Weise ein Fotometer mit zwei Wellenlängen dargestellt werden.

Außerdem ist in Fig. 7 eine Spüleinrichtung 19 dargestellt, welche zum Spülen des Hohlraums 11 zwischen dem Gehäuse 7 und der Umlenkeinrichtung 9 dient und eine Zuführleitung 20 für ein Reinigungsmittel sowie eine Absaugleitung 21 zum Entleeren des Hohlraums 11 aufweist. Das Ausspülen des Hohlraums 11 ist somit ohne Entfernen der Vorrichtung 1 aus dem Stoff 2 möglich. Alternativ zu der Darstellung gemäß Fig. 7 können sowohl die Zuführleitung 20 und die Absaugleitung 21 als auch die Lichtleiter 4a und 5a sowie das Aufnahmeelement 15 und das Verschiebeelement 16 an anderen, für den jeweiligen Einsatzzweck geeigneten Stellen platziert sein. Des weiteren ist es alternativ oder zusätzlich zur Spülung des Hohlraums 11 mit der Zuführleitung 20 auch möglich, ein Referenzmedium in den Hohlraum 11 einzubringen, um bestimmte Vergleichsmessungen durchführen zu können. Außerdem kann eine nicht dargestellte eine Trocknungseinrichtung zum Trocknen des mittels der Spüleinrichtung 19 gespülten Hohlraums 11 vorgesehen sein, die beispielsweise mit Druckluft oder mit Stickstoff betrieben werden kann und für die bekannte Einrichtungen verwendet werden können.

Bei der Messung von Pulvern oder sonstigen rieselfähigen Stoffen ist es möglich, den Stoff 2 mittels der Verstelleinrichtung 10 zwischen der Umlenkeinrichtung 9 und dem Gehäuse 7 zu verpressen, so dass der Stoff 2 definiert zwischen den planparallelen Platten des Gehäuses 7 bzw. der Umlenkeinrichtung 9 liegt.

Fig. 8 zeigt eine Variante der Erfindung, bei der der zu messende Stoff in einem Rohr 23 aufgenommen ist. Wie aus Fig. 8 ersichtlich ist, ist das Gehäuse 7 an einer ersten Seite in das Rohr 23 eingeführt und die Verstelleinrichtung 10 ist an einer zweiten Seite, die der ersten Seite gegenüberliegt, in das Rohr 23 eingeführt und durch entsprechende Haltemittel 25 befestigt. Das bedeutet, dass das Gehäuse 7 und die Verstelleinrichtung 10 in der Weise in das Rohr 23 eingeführt sind, dass die entsprechenden Öffnungen im Rohr 23 eine gemeinsame Mittelachse aufweisen. Das Gehäuse 7 und das Gehäuse der Verstelleinrichtung 10 können jeweils über entsprechende Schnellverschlüsse 26 an dem Rohr 23 befestigt werden. Durch diese Anordnung der Verstelleinrichtung 10 außerhalb des Gehäuses 7 wird in vorteilhafter Weise Bauraum im Gehäuse 7 eingespart, so dass weitere, nicht dargestellte Komponenten problemlos im Gehäuse 7 untergebracht werden können. Die Verstelleinrichtung 10 umfasst wenigstens ein Antriebselement 27 und ein in dem wenigstens einen Antriebselement 27 verschiebbar gelagertes Verschiebeelement 16, wobei das Antriebselement 27 innerhalb der Verstelleinrichtung 10 fixiert ist und das Verschiebeelement 16 mit der Umlenkeinrichtung 9 verbunden ist. Im vorliegenden Fall wird das Verschiebeelement 16 beidseitig geführt, d.h. im Gehäuse 7 ist beispielsweise ein als Rohr ausgeführtes Führungselement 28 angeordnet, in dem das beispielsweise als Stange ausgeführte Verschiebelement 16 längsbeweglich geführt wird, und in der Verstelleinrichtung 10 wird das Verschiebeelement 16 durch das Antriebselement 27 geführt. Selbstverständlich sind jedoch auch andere Ausführungsformen des Führungselements 28, des Antriebselements 27 und des Verschiebeelements 16 denkbar, z.B. in Form von Gewinden oder ähnlichem.

Die Betätigung der Verstelleinrichtung 10 und damit die Verstellung der Umlenkeinrichtung 9 über das Verschiebeelement 16 können manuell erfolgen. Alternativ ist auch ein elektrischer, hydraulischer oder pneumatischer Antrieb des Verschiebeelements 16 denkbar, wozu bekannte Antriebselemente 27 eingesetzt werden können.

Die vorliegende Erfindung umfasst alle Ausführungsformen, die in den folgenden Sätzen beschrieben sind, die keine Ansprüche, sondern Teil der Beschreibung sind, entsprechend der Entscheidung der juristischen Beschwerdekammer J15/88.
[1.] Vorrichtung (1) zur optischen Messung von Stoffkonzentrationen, mit wenigstens einem in bzw. an einem Gehäuse (7) angeordneten Sender (4) und wenigstens einem Empfänger (5) für optische Strahlung (6) und mit einer von dem wenigstens einen Sender (4) und dem wenigstens einen Empfänger (5) beabstandeten, bei bestimmungsgemäßer Verwendung der Vorrichtung (1) innerhalb des Stoffes (2) angeordneten Umlenkeinrichtung (9) zum Umlenken der optischen Strahlung (6) von dem wenigstens einen Sender (4) zu dem wenigstens einen Empfänger (5), wobei der Abstand der Umlenkeinrichtung (9) zu dem wenigstens einen Sender (4) und/oder dem wenigstens einen Empfänger (5) mittels einer Verstelleinrichtung (10) veränderbar ist,
   **dadurch gekennzeichnet, dass**
   die Umlenkeinrichtung (9) so gegenüber dem wenigstens einen Sender (4) und dem wenigstens einen Empfänger (5) verstellbar ist, dass die Umlenkeinrichtung (9) mit dem Gehäuse (7) einen abgeschlossenen Hohlraum (11) bildet.
[2.]Vorrichtung nach Satz 1,
   **dadurch gekennzeichnet, dass**
   die Verstelleinrichtung (10) wenigstens ein Aufnahmeelement (15) und ein in dem wenigstens einen Aufnahmeelement (15) verschieblich gelagertes Verschiebeelement (16) aufweist, wobei eines der Bauteile der Verstelleinrichtung (10) mit dem Gehäuse (7) und das andere Bauteil mit der Umlenkeinrichtung (9) verbunden ist.
[3.] Vorrichtung nach Satz 1 oder 2,
   **dadurch gekennzeichnet, dass**
   die Verstelleinrichtung (10) elektrisch, hydraulisch oder pneumatisch verstellbar ist.
[4.] Vorrichtung nach Satz 1,
   **dadurch gekennzeichnet, dass**
   zwischen der Umlenkeinrichtung (9) und dem Gehäuse (7) eine Dichtung (12) angeordnet ist.
[5.] Vorrichtung nach Satz 1 oder 4,
   **dadurch gekennzeichnet, dass**
   eine Spüleinrichtung (19) zum Spülen des Hohlraums (11) zwischen dem Gehäuse (7) und der Umlenkeinrichtung (9) vorgesehen ist.
[6.] Vorrichtung nach Satz 5,
   **dadurch gekennzeichnet, dass**
   eine Trocknungseinrichtung zum Trocknen des mittels der Spüleinrichtung (19) gespülten Hohlraums (11) zwischen dem Gehäuse (7) und der Umlenkeinrichtung (9) vorgesehen ist.
[7.] Vorrichtung nach einem der Sätze 1 bis 6,
   **dadurch gekennzeichnet, dass**
   eine Abstandsmesseinrichtung zum Messen des Abstands zwischen der Umlenkeinrichtung (9) und dem wenigstens einen Sender (4) und dem wenigstens einen Empfänger (5) bzw. einem Gehäuse (7) vorgesehen ist.
[8.] Vorrichtung nach einem der Sätze 1 bis 7,
   **dadurch gekennzeichnet, dass**
   die Umlenkeinrichtung (9) so angeordnet ist, dass die optische Strahlung (6) zweimal durch den Stoff (2) verläuft.
[9.] Vorrichtung nach einem der Sätze 1 bis 7,
   **dadurch gekennzeichnet, dass**
   die Umlenkeinrichtung (9) so angeordnet ist, dass die optische Strahlung (6) einmal durch den Stoff (2) verläuft.
[10.] Vorrichtung nach Satz 9,
   **dadurch gekennzeichnet, dass**
   in dem Bereich zwischen dem Gehäuse (7) und der Umlenkeinrichtung (9) ein Rohr (14) angeordnet ist, durch welches die optische Strahlung (6) geführt ist.
[11.] Vorrichtung nach einem der Sätze 1 bis 10,
   **dadurch gekennzeichnet, dass**
   mehrere Sender (4) und mehrere, den Sendern (4) zugeordnete Empfänger (5) vorgesehen sind.
[12.] Vorrichtung nach einem der Sätze 1 bis 11,
   **dadurch gekennzeichnet, dass**
   die Vorrichtung in der Weise ausgebildet ist, dass die auf den zu messenden Stoff einfallende optische Strahlung (6) und der Anteil der optischen Strahlung (6), der den Empfänger (5) erreicht, im wesentlichen senkrecht zu einander sind.
[13.] Vorrichtung nach Satz 12,
   **dadurch gekennzeichnet, dass**
   die Vorrichtung ein reflektives Element aufweist, durch das der Teil der optischen Strahlung (6), der von dem zu messenden Stoff in die dem Empfänger (5) entgegengesetzte Richtung emittiert wird, in Richtung des Empfängers (5) umgelenkt wird.
[14.] Vorrichtung nach Satz 12,
   **dadurch gekennzeichnet, dass**
   die Vorrichtung Mittel (22,31,32,33,34) zur gleichzeitigen bzw. sequentiellen Messung von Absorption, Fluoreszenz und Streuung durch den zu messenden Stoff aufweist
[15.] Vorrichtung nach einem der Sätze 1 bis 14,
   **dadurch gekennzeichnet, dass**
   der zu messende Stoff in einem Rohr (23) geführt ist, wobei das Gehäuse (7) an einer ersten Seite in das Rohr (23) eingeführt ist und die Verstelleinrichtung (10) an einer zweiten Seite in das Rohr (23) eingeführt ist.
[16.] Vorrichtung nach Satz 15,
**dadurch gekennzeichnet, dass**
das Gehäuse (7) und die Verstelleinrichtung (10) in der Weise in das Rohr (23) eingeführt sind, dass die entsprechenden Öffnungen im Rohr eine gemeinsame Mittelachse aufweisen.

## Patentansprüche

1. Vorrichtung (1) zur optischen Messung von Stoffkonzentrationen, mit wenigstens einem in bzw. an einem Gehäuse (7) angeordneten Sender (4) und wenigstens einem Empfänger (5) für optische Strahlung (6) und mit einer von dem wenigstens einen Sender (4) und dem wenigstens einen Empfänger (5) beabstandeten, bei bestimmungsgemäßer Verwendung der Vorrichtung (1) innerhalb des Stoffes (2) angeordneten Umlenkeinrichtung (9) zum Umlenken der optischen Strahlung (6) von dem wenigstens einen Sender (4) zu dem wenigstens einen Empfänger (5), wobei der Abstand der Umlenkeinrichtung (9) zu dem wenigstens einen Sender (4) und/oder dem wenigstens einen Empfänger (5) mittels einer Verstelleinrichtung (10) veränderbar ist,
**dadurch gekennzeichnet, dass**
die Umlenkeinrichtung (9) so gegenüber dem wenigstens einen Sender (4) und dem wenigstens einen Empfänger (5) verstellbar ist, dass die Umlenkeinrichtung (9) mit dem Gehäuse (7) einen abgeschlossenen Hohlraum (11) bildet.

2. Vorrichtung nach Anspruch 1,
**dadurch gekennzeichnet, dass**
die Verstelleinrichtung (10) wenigstens ein Aufnahmeelement (15) und ein in dem wenigstens einen Aufnahmeelement (15) verschieblich gelagertes Verschiebeelement (16) aufweist, wobei eines der Bauteile der Verstelleinrichtung (10) mit dem Gehäuse (7) und das andere Bauteil mit der Umlenkeinrichtung (9) verbunden ist.

3. Vorrichtung nach Anspruch 1 oder 2,
**dadurch gekennzeichnet, dass**
die Verstelleinrichtung (10) elektrisch, hydraulisch oder pneumatisch verstellbar ist.

4. Vorrichtung nach Anspruch 1,
**dadurch gekennzeichnet, dass**
zwischen der Umlenkeinrichtung (9) und dem Gehäuse (7) eine Dichtung (12) angeordnet ist.

5. Vorrichtung nach Anspruch 1 oder 4,
**dadurch gekennzeichnet, dass**
eine Spüleinrichtung (19) zum Spülen des Hohlraums (11) zwischen dem Gehäuse (7) und der Umlenkeinrichtung (9) vorgesehen ist.

6. Vorrichtung nach Anspruch 5
**dadurch gekennzeichnet, dass**
eine Trocknungseinrichtung zum Trocknen des mittels der Spüleinrichtung (19) gespülten Hohlraums (11) zwischen dem Gehäuse (7) und der Umlenkeinrichtung (9) vorgesehen ist.

7. Vorrichtung nach einem der Ansprüche 1 bis 6,
**dadurch gekennzeichnet, dass**
eine Abstandsmesseinrichtung zum Messen des Abstands zwischen der Umlenkeinrichtung (9) und dem wenigstens einen Sender (4) und dem wenigstens einen Empfänger (5) bzw. einem Gehäuse (7) vorgesehen ist.

8. Vorrichtung nach einem der Ansprüche 1 bis 7,
**dadurch gekennzeichnet, dass**
die Umlenkeinrichtung (9) so angeordnet ist, dass die optische Strahlung (6) zweimal durch den Stoff (2) verläuft.

9. Vorrichtung nach einem der Ansprüche 1 bis 7,
**dadurch gekennzeichnet, dass**
die Umlenkeinrichtung (9) so angeordnet ist, dass die optische Strahlung (6) einmal durch den Stoff (2) verläuft.

10. Vorrichtung nach Anspruch 9,
**dadurch gekennzeichnet, dass**
in dem Bereich zwischen dem Gehäuse (7) und der Umlenkeinrichtung (9) ein Rohr (14) angeordnet ist, durch welches die optische Strahlung (6) geführt ist.

11. Vorrichtung nach einem der Ansprüche 1 bis 10,
**dadurch gekennzeichnet, dass**
mehrere Sender (4) und mehrere, den Sendern (4) zugeordnete Empfänger (5) vorgesehen sind.

12. Vorrichtung nach einem der Ansprüche 1 bis 11,
**dadurch gekennzeichnet, dass**
die Vorrichtung in der Weise ausgebildet ist, dass die auf den zu messenden Stoff einfallende optische Strahlung (6) und der Anteil der optischen Strahlung (6), der den Empfänger (5) erreicht, im wesentlichen senkrecht zu einander sind.

13. Vorrichtung nach Anspruch 12,
**dadurch gekennzeichnet, dass**
die Vorrichtung ein reflektives Element aufweist, durch das der Teil der optischen Strahlung (6), der von dem zu messenden Stoff in die dem Empfänger (5) entgegengesetzte Richtung emittiert wird, in Richtung des Empfängers (5) umgelenkt wird.

14. Vorrichtung nach Anspruch 12,
**dadurch gekennzeichnet, dass**
die Vorrichtung Mittel (22,31,32,33,34) zur gleichzeitigen bzw. sequentiellen Messung von Absorption, Fluoreszenz und Streuung durch den zu messenden Stoff aufweist

15. Vorrichtung nach einem der Ansprüche 1 bis 14,
**dadurch gekennzeichnet, dass**
der zu messende Stoff in einem Rohr (23) geführt ist, wobei das Gehäuse (7) an einer ersten Seite in das Rohr (23) eingeführt ist und die Verstelleinrichtung (10) an einer zweiten Seite in das Rohr (23) eingeführt ist.

16. Vorrichtung nach Anspruch 15,
**dadurch gekennzeichnet, dass**
das Gehäuse (7) und die Verstelleinrichtung (10) in der Weise in das Rohr (23) eingeführt sind, dass die entsprechenden Öffnungen im Rohr eine gemeinsame Mittelachse aufweisen.

## Claims

1. Apparatus (1) for optical measurement of substance concentrations, having at least one transmitter (4) arranged in or on a housing (7) and at least one receiver (5) for optical radiation (6) and having a deflecting device (9), which is at a distance from the at least one transmitter (4) and the at least one receiver (5) and is arranged within the substance (2) on use of the apparatus (1) as intended, for deflecting the optical radiation (6) from the at least one transmitter (4) to the at least one receiver (5), the distance of the deflecting device (9) from the at least one transmitter (4) and/or the at least one receiver (5) being variable by means of an adjusting device (10),
**characterised in that**
the deflecting device (9) is adjustable with respect to the at least one transmitter (4) and the at least one receiver (5) in such a way that the deflecting device (9) forms a closed-off hollow space (11) with the housing (7).

2. Apparatus according to Claim 1,
**characterised in that**
the adjusting device (10) has at least one receiving element (15) and a displacing element (16) displaceable mounted in the at least one receiving element (15), one of the components of the adjusting device (10) being connected to the housing (7) and the other component being connected to the deflecting device (9).

3. Apparatus according to Claim 1 or 2,
**characterised in that**
the adjusting device (10) is electrically, hydraulically or pneumatically adjustable.

4. Apparatus according to Claim 1,
**characterised in that**
a seal (12) is arranged between the deflecting device (9) and the housing (7).

5. Apparatus according to Claim 1 or 4,
**characterised in that**
a rinsing device (19) is provided for rinsing the hollow space (11) between the housing (7) and the deflecting device (9).

6. Apparatus according to Claim 5,
**characterised in that**
a drying device is provided for drying the hollow space (11) between the housing (7) and the deflecting device (9) rinsed by means of the rinsing device (19).

7. Apparatus according to one of Claims 1 to 6,
**characterised in that**
a distance-measuring device is provided for measuring the distance between the deflecting device (9) and the at least one transmitter (4) and the at least one receiver (5) or a housing (7).

8. Apparatus according to one of Claims 1 to 7,
**characterised in that**
the deflecting device (9) is arranged in such a way that the optical radiation (6) passes twice through the substance (2).

9. Apparatus according to one of Claims 1 to 7,
**characterised in that**
the deflecting device (9) is arranged in such a way that the optical radiation (6) passes once through the substance (2).

10. Apparatus according to Claim 9,
**characterised in that**
a pipe (14), through which the optical radiation (6) is guided, is arranged in the region between the housing (7) and the deflecting device (9).

11. Apparatus according to one of Claims 1 to 10,
**characterised in that**
a plurality of transmitters (4) and a plurality of receivers (5) assigned to the transmitters (4) are provided.

12. Apparatus according to one of Claims 1 to 11,
**characterised in that**
the device is designed in such a way that the optical radiation (6) incident on the substance to be measured and the portion of the optical radiation (6) reaching the receiver (5) are substantially perpendicular to one another.

13. Apparatus according to Claim 12,
**characterised in that**
the apparatus has a reflective element, by which the part of the optical radiation (6) emitted by the substance to be measured in the direction opposite the receiver (5) is deflected in the direction of the receiver (5).

14. Apparatus according to Claim 12,
**characterised in that**
the apparatus has means (22,31,32,33,34) for the simultaneous or sequential measurement of absorption, fluorescence and diffusion by the substance to be measured.

15. Apparatus according to one of Claims 1 to 14,
**characterised in that**
the substance to be measured is guided in a pipe (23), the housing (7) being inserted into the pipe (23) at a first side and the adjusting device (10) being inserted into the pipe (23) at a second side.

16. Apparatus according to Claim 15,
**characterised in that**
the housing (7) and the adjusting device (10) are inserted into the pipe (23) in such a way that the corresponding openings in the pipe have a common centre axis.

## Revendications

1. Dispositif (1) pour la mesure optique de concentrations de matières, comprenant au moins un émetteur (4) disposé dans ou contre un boîtier (7) et au moins un récepteur (5) pour rayonnement optique (6) et un dispositif déflecteur (9) distant de l'au moins un émetteur (4) et de l'au moins un réflecteur (5), disposé dans la matière (2) lorsque le dispositif (1) est utilisé conformément à sa fonction, et prévu pour dévier le rayonnement optique (6) de l'au moins un émetteur (4) vers l'au moins un récepteur (5), dans lequel la distance séparant le dispositif déflecteur (9) de l'au moins un émetteur (4) et/ou de l'au moins un récepteur (5) peut être modifiée au moyen d'un dispositif de réglage (10),
**caractérisé en ce que**
le dispositif déflecteur (9) peut être déplacé par rapport à l'au moins un émetteur (4) et à l'au moins un récepteur (5) de telle manière que le dispositif déflecteur (9) forme une cavité fermée (11) avec le boîtier (7).

2. Dispositif selon la revendication 1,
**caractérisé en ce que**
le dispositif de réglage (10) comporte au moins un élément de logement (15) et un élément mobile (16) monté mobile dans l'au moins un élément de logement (15), un des composants du dispositif de réglage (10) étant relié au boîtier (7) et l'autre composant étant relié au dispositif déflecteur (9).

3. Dispositif selon la revendication 1 ou 2,
**caractérisé en ce que**
le dispositif de réglage (10) peut être réglé par voie électrique, hydraulique ou pneumatique.

4. Dispositif selon la revendication 1,
**caractérisé en ce que**
une garniture d'étanchéité (12) est disposée entre le dispositif déflecteur (9) et le boîtier (7).

5. Dispositif selon la revendication 1 ou 4,
**caractérisé en ce que**
un dispositif de lavage (19) destiné à laver la cavité (11) est prévu entre le boîtier (7) et le dispositif déflecteur (9).

6. Dispositif selon la revendication 5,
**caractérisé en ce que**
un dispositif de séchage destiné à sécher la cavité (11) lavée au moyen du dispositif de lavage (19) est prévu entre le boîtier (7) et le dispositif déflecteur (9).

7. Dispositif selon l'une des revendications 1 à 6,
**caractérisé en ce que**
il est prévu un dispositif de mesure de la distance destiné à mesurer la distance séparant le dispositif déflecteur (9) de l'au moins un émetteur (4) et de l'au moins un récepteur (5) ou d'un boîtier (7).

8. Dispositif selon l'une des revendications 1 à 7,
**caractérisé en ce que**
le dispositif déflecteur (9) est disposé de telle manière que le rayonnement optique (6) passe deux fois à travers la matière (2).

9. Dispositif selon l'une des revendications 1 à 7,
**caractérisé en ce que**
le dispositif déflecteur (9) est disposé de telle manière que le rayonnement optique (6) passe une fois à travers la matière (2).

10. Dispositif selon la revendication 9,
**caractérisé en ce que,**
dans la région située entre le boîtier (7) et le dispositif déflecteur (9), est disposé un tube (14) dans lequel passe le rayonnement optique (6).

11. Dispositif selon l'une des revendications 1 à 10,
**caractérisé en ce qu'**
il est prévu plusieurs émetteurs (4) et plusieurs récepteurs (5) correspondant aux émetteurs (4).

12. Dispositif selon l'une des revendications 1 à 11,
**caractérisé en ce que**
le dispositif est construit de telle manière que le rayonnement optique (6) qui tombe sur la matière à mesurer et la fraction du rayonnement optique (6) qui atteint le récepteur (5) sont sensiblement perpendiculaires l'un à l'autre.

13. Dispositif selon la revendication 12,
**caractérisé en ce que**
le dispositif comporte un élément réfléchissant par lequel la partie du rayonnement optique (6) qui est émise par la matière à mesurer dans la direction à l'opposé du récepteur (5) est déviée en direction du récepteur (5).

14. Dispositif selon la revendication 12,
**caractérisé en ce que**
le dispositif comporte des moyens (22, 31, 32, 33, 34) pour la mesure simultanée ou séquentielle de l'absorption, de la fluorescence et de la dispersion de la matière à mesurer.

15. Dispositif selon l'une des revendications 1 à 14,
**caractérisé en ce que**
la matière à mesurer circule dans un tube (23), le boîtier (7) étant engagé dans le tube (23) sur un premier côté et le dispositif de réglage (10) étant engagé dans le tube (23) sur un second côté.

16. Dispositif selon la revendication 15,
**caractérisé en ce que**
le boîtier (7) et le dispositif de réglage (10) sont engagés dans le tube (23) de telle manière que les ouvertures correspondantes ménagées dans le tube présentent un axe médian commun.
